Europäisches Patentamt

(19) European Patent Office

Office européen des brevets

(11) Publication number: **0 183 430**
A2

(12) # EUROPEAN PATENT APPLICATION

(21) Application number: **85308248.5**

(22) Date of filing: **13.11.85**

(51) Int. Cl.⁴: **G 02 B 1/10**
**F 21 V 7/22, C 23 C 14/14**

(30) Priority: **21.11.84 GB 8429365**

(43) Date of publication of application:
**04.06.86 Bulletin 86/23**

(84) Designated Contracting States:
**DE FR GB IT**

(71) Applicant: **LUCAS INDUSTRIES public limited company**
**Great King Street**
**Birmingham, B19 2XF West Midlands(GB)**

(72) Inventor: **Burkill, John Antony, Dr.**
**30 Darlaston Court Main Road**
**Meriden Warwickshire(GB)**

(72) Inventor: **Thompson, Adrian Donald**
**162 Donnington Close Churchill**
**Redditch Worcestershire(GB)**

(72) Inventor: **Turner, Rhoderick Nigel**
**10 Gospel Lane**
**Acocks Green Birmingham B27 7AA(GB)**

(74) Representative: **Carpenter, David et al,**
**Marks & Clerk Alpha Tower Suffolk Street Queensway**
**Birmingham B1 1TT(GB)**

(54) Reflective article and a method of making same.

(57) A reflective article, e.g. a mirror or a reflector, has a reflective surface formed by a vacuum deposited alloy consisting of aluminium and 4 to 40% by weight of zirconium. The inclusion of zirconium improves the normally low resistance of a vacuum-deposited aluminium film to progressive loss of reflectivity in service.

EP 0 183 430 A2

Croydon Printing Company Ltd.

<u>"REFLECTIVE ARTICLE AND A METHOD OF MAKING SAME"</u>

This invention relates to reflective articles, e.g. planar or curved mirrors for use, for example, in scientific instruments, and to reflectors used in light units, e.g. road vehicle light units such as head lights, fog lights, spot lights and signal lights; and to a method of making such reflectors. The invention is also applicable to articles provided with a decorative reflective finish.

It is common practice to use a vacuum-deposited aluminium film to form the reflective surface of a light reflector. Aluminium provides a very efficient reflective surface but, when unprotected, has the disadvantage of progressively losing its reflectivity in service. This deterioration in reflectivity has been explained as being due to the presence of a discontinuous film of amorphous aluminium oxide structurally changing to a crystalline form which, in the presence of moisture, transforms to the hydroxide which is readily washed off by the normal moisture in the atmosphere. In order to mitigate this problem, it has previously been the practice to apply a protective layer of a transparent liquid organic varnish (lacquer) over the vacuum-deposited aluminium film. The provision of such a protective coating has the disadvantage that it is an additional step which increases the cost of manufacture. Additionally, complex handling techniques are required to ensure uniform coating with the avoidance of running or drip marks in the coating which could impair the optical performance of the reflector. Further, the provision of a protective coating over the reflective aluminium surface causes a reduction in reflectivity of about 5 to 9%. Other techniques for protection of the reflective layer have involved (a) the vacuum-deposition of silicon oxide or magnesium fluoride, which does not work particularly satisfactorily; or (b) the vacuum deposition of organic layers onto the reflective surface, which has problems including contamination of the vacuum system. Also, these techniques involve additional expensive vapour deposition equipment. Electror beam evaporation of quartz has also been attempted but is expensive.

It is an object of the present invention to provide a reflective film which is more resistant to deterioration than a pure aluminium film, thus enabling the requirement for the provision of a separate protective layer over the reflective film to be obviated or mitigated.

According to one aspect of the present invention, there is provided a reflective article comprising a body having a reflective surface formed of a layer of an alloy containing aluminium and zirconium, wherein the alloy contains 4 to 40% by weight of zirconium.

Generally, the alloy contains at least 50% by weight, preferably at least 60% by weight, of aluminium.

The alloy preferably consists of aluminium and zirconium (apart from any incidental impurities).

Preferably, the aluminium alloy layer is a vacuum sputtered layer.

Also according to the present invention there is provided a method of making a reflective article comprising applying a layer of an alloy containing aluminium and zirconium, wherein the alloy contains 4 40% by weight of zirconium, onto a surface of a body by vacuum-deposition.

Generally, the alloy contains at least 50% by weight, preferably at least 60% by weight, of aluminium.

The alloy preferably consists of aluminium and zirconium (apart from any incidental impurities).

Preferably, the vacuum-deposition is by vacuum sputtering.

Most preferably, the vacuum sputtering is effected at a pressure of $2 \times 10^{-4}$ to $50 \times 10^{-3}$ mbar using a vacuum chamber back-filled with an inert gas, eg argon.

Conveniently, the vacuum sputtering is by magnetron sputtering. With magnetron sputtering, the pressure is preferably $2 \times 10^{-3}$ to $40 \times 10^{-3}$ mbar.

Instead of using a sputtering technique to apply the alloy layer, another technique e.g flash evaporation using an alloy wire source deposition, may be employed.

The present invention is applicable to reflective articles where the body is formed of metal, glass or synthetic plastics material. Normally, at least that portion of the surface of the reflective article which is to be rendered reflective is coated with a lacquer to provide a smooth surface finish before the aluminium alloy layer is deposited.

The present invention will now be further described in the following examples.

Example 1

A headlight reflector body formed from a low profile thermosetting unsaturated polyester resin composition by an injection moulding technique was coated with a lacquer to provide a smooth surface finish. The lacquered reflector body was provided with a reflective coating over the whole of its surface by vacuum sputter deposition of an alloy comprising 80.8% by weight aluminium and 19.2% by weight zirconium. This coating was effected using a vacuum magnetron sputter coating technique in a chamber evacuated to a pressure of $2 \times 10^{-6}$ mbar and backfilled with high purity argon to a pressure of $7 \times 10^{-3}$ mbar.

The reflector body was placed 7cm from a 5cm diameter sputtering source comprising an aluminium disc containing zirconium inclusions. The disc was prepared by pressing 3mm x 3mm diameter pellets of zirconium (purity 99.8%) into a disc of aluminium (purity 99.9%) using a hydraulic press. This ensures good thermal contact between the zirconium pellets and the aluminium disc which is important in maintaining stable sputtering conditions. The amount of zirconium pellets chosen was such as to give the above described ratio of aluminium to zirconium. This way of producing the alloy source was found to be a useful alternative to a disc formed of an alloy of aluminium and zirconium since it enables relatively economical testing of aluminium alloys containing varying amounts of zirconium. This technique is applicable generally to the production of test targets useful for deposition of alloys.

In the vacuum magnetron sputter coating technique, the source was operated at a power of 1200 W for a period of 2 minutes and the reflector body was coated to a thickness of between 500 and 1000 Angstroms with the aluminium/zirconium alloy before being removed from the vacuum chamber. The thus-coated reflector body was found to have a reflectivity of 87.3% using light of a wavelength of 560nm and was visually virtually indistinguishable from a conventionally coated pure aluminium film. However, in an accelerated humidity resistance test carried out at 70°C for 1 hour at a relative humidity of 100%, it was found that no degradation of the film had taken place. As a comparison, it was found that almost all of the reflective film had become removed within 15 minutes in the case of a similar reflector body provided with a reflective film of pure aluminium.

Example 2

Example 1 above was repeated using different alloys of aluminium and zirconium and the results obtained are shown in the Table below.

| SAMPLE | 1 | 2 | 3 | 4 | 5 | 6 |
|---|---|---|---|---|---|---|
| % Zr | 40 | 37.2 | 28.4 | 20.9 | 9.7 | 4 |
| Reflectivity % 560nm | 71 | 72.3 | 80.4 | 84.2 | 88.0 | 91.5 |
| Time min to failure in humidity test | 235 | 210 | 120 | 90 | 60 | 18 |

CLAIMS

1.    A reflective article comprising a body having a reflective surface formed of a layer of an alloy containing aluminium and zirconium, wherein the alloy contains 4 to 40% by weight of zirconium.

2.    A reflective article as claimed in Claim 1, where the alloy contains at least 50% by weight of aluminium.

3.    A reflective article as claimed in Claim 2, wherein the alloy contains at least 60% by weight of aluminium.

4.    A reflective article as claimed in Claim 1, 2 or 3, wherein the alloy consists of aluminium and zirconium (apart from any incidental impurities).

5.    A reflective article as claimed in any preceding claim, where the aluminium alloy layer is a vacuum sputtered layer.

6.    A method of making a reflective article comprising applying a layer of an alloy containing aluminium and zirconium, wherein the alloy contains 4 to 40% by weight of zirconium, onto a surface of a body by vacuum-deposition.

7.    A method as claimed in Claim 6, wherein the alloy contains at least 50% by weight of aluminium.

8.    A method as claimed in Claim 7, wherein the alloy contains at least 60% of aluminium.

0183430

9.     A method as claimed in Claim 6, 7 or 8, wherein the alloy consists of aluminium and zirconium (apart from any incidental impuritie).

10.    A method as claimed in any one of Claims 6 to 9, wherein the vacuum-deposition is by vacuum sputtering.